# EUROPÄISCHE PATENTSCHRIFT

(11) **EP 3 399 168 B1**
(45) Veröffentlichungstag und Bekanntmachung des Hinweises auf die Patenterteilung: **16.09.2020**
(21) Anmeldenummer: 18167913.5
(22) Anmeldetag: 18.04.2018
(51) Int. Cl.: F02B 75/04, F16C 7/06, F16K 11/00, F16K 15/14

(54) **PLEUEL FÜR EINE BRENNKRAFTMASCHINE MIT VARIABLER VERDICHTUNG MIT HYDRAULIKMODUL MIT EINEM UMSCHALTVENTIL ZUM STEUERN EINES HYDRAULIKFLÜSSIGKEITSSTROMS**
CONNECTING ROD FOR A COMBUSTION ENGINE WITH VARIABLE COMPRESSION HAVING HYDRAULIC MODULE WITH A SELECTOR VALVE FOR CONTROLLING A HYDRAULIC FLUID STREAM
BIELLE POUR UN MOTEUR À COMBUSTION INTERNE À COMPRESSION VARIABLE AVEC MODULE HYDRAULIQUE POURVU D'UNE SOUPAPE D'INVERSION PERMETTANT DE COMMANDER UN FLUX DE FLUIDE HYDRAULIQUE

(30) Priorität: 04.05.2017 DE 102017109574; 13.09.2017 DE 102017121236
(43) Veröffentlichungstag der Anmeldung: 07.11.2018
(73) Patentinhaber: ECO Holding 1 GmbH, 97828 Marktheidenfeld (DE)
(72) Erfinder: Rupp, Wolfgang, 97906 Faulbach (DE); Mudra, Alexander, 97828 Marktheidenfeld (DE); Schulze, Dietmar, 35516 Münzenberg (DE)

(56) Entgegenhaltungen:
- EP-A1- 2 375 014
- WO-A1-2016/058600
- WO-A1-2016/103554
- DE-A1-102006 012 733
- DE-A1-102012 014 917
- DE-A1-102012 020 999

## Beschreibung

### Technisches Gebiet

Die Erfindung betrifft ein Hydraulikmodul mit einem Umschaltventil zum Steuern eines Hydraulikflüssigkeitsstroms eines Pleuels für eine Brennkraftmaschine mit variabler Verdichtung mit einer Exzenter-Verstelleinrichtung zur Verstellung einer effektiven Pleuelstangenlänge sowie einen Pleuel mit einem derartigen Hydraulikmodul.

### Stand der Technik

Bei Brennkraftmaschinen wirkt sich ein hohes Verdichtungsverhältnis positiv auf den Wirkungsgrad der Brennkraftmaschine aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuelstangenlänge bekannt.

Ein gattungsgemäßer Pleuel für eine Brennkraftmaschine mit variabler Verdichtung mit einem Hydraulikmodul sowie mit einer Exzenter-Verstelleinrichtung zur Verstellung einer effektiven Pleuelstangenlänge ist beispielsweise aus der DE 10 2012 020 999 A1 bekannt.

Aus der DE 10 2012 014 917 A1 ist ein weiterer Pleuel für eine Brennkraftmaschine mit variabler Verdichtung bekannt. Die Zu- und Abläufe der Zylinder sind als separate Leitungen in der Pleuelstange vorgesehen und münden jeweils im Hublagerauge des Pleuels.

### Offenbarung der Erfindung

Eine Aufgabe der Erfindung ist es, einen verbesserten Pleuel für eine Brennkraftmaschine mit variabler Verdichtung mit einer Exzenter-Verstelleinrichtung zur Verstellung einer effektiven Pleuelstangenlänge mit einem Hydraulikmodul zu schaffen, welcher ein stabiles Betriebsverhalten aufweist. Gleichzeitig soll der Pleuel möglichst einfach und kostengünstig ausgestaltet sein.

Die vorgenannte Aufgabe wird gelöst mit den Merkmalen des unabhängigen Anspruchs.

Günstige Ausgestaltungen und Vorteile der Erfindung ergeben sich aus den weiteren Ansprüchen, der Beschreibung und der Zeichnung.

Es wird nach einem Aspekt der Erfindung ein Pleuel für eine Brennkraftmaschine mit variabler Verdichtung mit einer Exzenter-Verstelleinrichtung zur Verstellung einer effektiven Pleuelstangenlänge umfassend ein Hydraulikmodul mit einem Umschaltventil zum Steuern eines Hydraulikflüssigkeitsstroms des Pleuels vorgeschlagen, wobei die Exzenter-Verstelleinrichtung wenigstens einen ersten Zylinder und einen zweiten Zylinder als Hydraulikkammern aufweist und wobei jeweils eine Leitung als gemeinsamer Zu- und Ablauf in die Zylinder mündet, wobei der Zulauf zum Zuführen von Hydraulikflüssigkeit in die Zylinder und der Ablauf zum Abführen von Hydraulikflüssigkeit von den Zylindern vorgesehen sind. Den Zylindern ist jeweils ein Rückschlagventil zugeordnet, welches im Zulauf angeordnet ein Zuführen von Hydraulikflüssigkeit in die Zylinder ermöglicht und ein Abführen von Hydraulikflüssigkeit von den Zylindern verhindert. Die Rückschlagventile sind dabei vorzugsweise in das Umschaltventil integriert. Das Umschaltventil weist einen beweglichen Kolben auf, welcher wahlweise in eine erste Schaltstellung oder eine zweite Schaltstellung verlagerbar ist, wobei die Zylinder derart verbunden sind, dass in der ersten Schaltstellung Hydraulikflüssigkeit aus dem ersten Zylinder in den zweiten Zylinder leitbar ist.

An einem ersten Arbeitsanschluss des erfindungsgemäßen Umschaltventils kann der erste Zylinder als Hydraulikkammer des verstellbaren Pleuels, beispielsweise der Zylinder auf einer Gaskraftseite (GKS) des Pleuels, angeschlossen sein und an dem zweiten Arbeitsanschluss kann der zweite Zylinder als Hydraulikkammer, beispielsweise der Zylinder auf der Massenkraftseite (MKS) des Pleuels angeschlossen sein. Die entsprechenden Kammern werden üblicherweise als GKS-Kammer bzw. MKS-Kammer bezeichnet.

Die drehzahlabhängige Beschleunigung der im Pleuel befindlichen relativ langen Hydraulikflüssigkeitssäulen des als Hydraulikflüssigkeit verwendeten Motoröls können Druckdifferenzen erzeugen. Diese können sich sowohl positiv als auch negativ auswirken, d.h. die Hydraulikflüssigkeitssäulen können so beschleunigt werden, dass das Entleeren und Füllen der Hydraulikkammern der Zylinder des Pleuels unterstützt wird, aber auch, dass dies behindert wird. Vor allem bei einem Zylinder auf der Massenkraftseite (MKS) des Pleuels kann sich dieser Effekt negativ auswirken. Die Beschleunigung der Hydraulikflüssigkeitssäulen kann bewirken, dass sich vor und hinter dem MKS-seitigen Rückschlagventil keine positive Druckdifferenz mehr ausbildet, die bewirkt, dass in die MKS-Kammer Hydraulikflüssigkeit nachgefördert werden kann. Da die Kammern durch Leckage und andere Effekte immer Hydraulikflüssigkeit verlieren, bewirkt das ein stufenartiges, langsames Verstellen des Exzenters über mehrere Umdrehungen und damit der effektiven Länge des Pleuels von einer Stellung niedriger Verdichtung (ε_{low}), welche der ersten Schaltstellung des Umschaltventils entspricht, in eine Stellung hoher Verdichtung (ε_{high}), welche der zweiten Schaltstellung des Umschaltventils entspricht. Man spricht dabei vom sogenannten Abdriften. Dies tritt vor allem in Motorlastfällen auf mit hohen Massenkräften (Zugkraft und Druckkraft am Pleuel) und niedrigen Gaskräften (Druckkraft am Pleuel). Eine eventuelle Verstellung des Pleuels in Richtung hoher Verdichtung ε_{high} durch die Massenkräfte in Zugrichtung kann von den Massenkräften in Druckrichtung und den Gaskräften nicht wieder vollständig zurückgestellt werden.

Dieser Effekt kann mit dem erfindungsgemäßen Hydraulikmodul vorteilhaft vermieden werden dadurch, dass die GKS-Kammer die in der Stellung niedriger Verdichtung (ε_{low}) nachgeförderte Hydraulikflüssigkeit direkt und ungedrosselt in die MKS-Kammer leiten kann. Dies kann bewirkt werden, weil die Hydraulikflüssigkeit, die die GKS-Kammer durch die am Pleuel angreifenden Gas- und Massenkräfte in Druckrichtung in die MKS-Kammer drückt, einen wesentlich höheren Druck hat als der Hydraulikflüssigkeitsdruck der Hydraulikversorgung in der Lagerschale des Pleuels. Dadurch kann die Hydraulikflüssigkeit von der GKS-Kammer in die MKS-Kammer gedrückt werden.

Neben der Lagestabilität der Exzenter-Verstelleinrichtung des Pleuels in der Stellung ε_{low}, d.h. dass sich nach einer Umdrehung der Pleuel wieder in seiner Endlage ε_{low} befindet, kann sich auch die Lagestabilität über die Umdrehung, bzw. die Steifigkeit des Pleuels erhöhen. Während einer Umdrehung gibt es nämlich immer eine Bewegung des Exzenterhebels, da die Hydraulikflüssigkeitssäulen auch eine gewisse Flexibilität haben und es so immer zu einem gewissen Einsinken des Stützkolbens in der gefüllten Kammer kommt. Stellt sich der Pleuel bis zum Ende der Umdrehung wieder vollständig zurück, spricht man von "lagestabil". Dennoch könnte bei einer Winkeländerung an dem Exzenter, bzw. der Hebelbaugruppe beim Rückstellen der jeweilige Stützkolben auf den Kammerboden schlagen, was sich auf die Lebensdauer negativ auswirken kann. Aus diesem Grund kann die Verstellgeschwindigkeit der Exzenter-Verstelleinrichtung begrenzt werden durch Drosselstellen in den Hydraulikleitungen. Eine mit Druck belastete vorgespannte MKS-Hydraulikflüssigkeitssäule sinkt vorteilhaft weniger ein als eine nicht vorgespannte Hydraulikflüssigkeitssäule. Weniger Einsinken bedeutet weniger Hebelbewegung, wodurch die Lagestabilität in der Stellung ε_{low} verbessert werden kann.

In der zweiten Schaltstellung ist Hydraulikflüssigkeit aus dem zweiten Zylinder in den ersten Zylinder leitbar. Dadurch ist ein schneller Schaltvorgang beim Schalten des Pleuels von der zweiten Schaltstellung hoher Verdichtung ε_{high} in die erste Schaltstellung niedriger Verdichtung ε_{low} realisierbar. Außerdem wird dadurch der Verbrauch an Hydraulikflüssigkeit günstig reduziert.

Erfindungsgemäß weist eine Versorgungsleitung des Umschaltventils eine Blende als Drossel auf, über welche in der ersten Schaltstellung ein Differenzvolumen der Zylinder gedrosselt abfließen und in der zweiten Schaltstellung ein Differenzvolumen der Zylinder nachgesaugt kann. Durch eine solche Drossel lässt sich vorteilhaft eine ausreichende hydraulische Vorspannung der MKS-Hydraulikkammer einstellen, da der Ablauf des ersten Zylinders in die Lagerschale dadurch gehemmt wird und sich vor dem Rückschlagventil des zweiten Zylinders ein Druck aufbaut.

Weiter weist der Ablauf des zweiten Zylinders wenigstens eine Blende als Drossel auf. Dadurch wird erreicht, dass der Schaltvorgang von niedriger Verdichtung ε_{low} nach hoher Verdichtung ε_{high} ausreichend langsam erfolgen kann, um Beschädigungen am Pleuel zu vermeiden und so eine ausreichende Stabilität des Schaltvorgangs zu erreichen.

Gemäß einer vorteilhaften Ausgestaltung kann in der Versorgungsleitung parallel zur Blende ein Rückschlagventil vorgesehen sein, welches ein Zuführen von Hydraulikflüssigkeit in das Umschaltventil ermöglicht und ein Abführen von Hydraulikflüssigkeit verhindert. Dadurch wird erreicht, dass benötigte Hydraulikflüssigkeit zwar ungedrosselt leicht zugeführt werden kann, aber dass ein Abfließen an Hydraulikflüssigkeit nur über die parallel geschaltete Blende als entsprechende Drossel und damit entsprechend langsam erfolgen kann. Auf diese Weise kann günstig eine entsprechende Vorspannung der MKS-Kammer erreicht werden.

Gemäß einer vorteilhaften Ausgestaltung kann das Rückschlagventil in der Versorgungsleitung als Schließelement ein im Wesentlichen ringförmiges Bandelement aufweisen, welches an einem Gehäuse des Umschaltventils wenigstens teilweise abgestützt ist und welches in einer geschlossenen Position wenigstens eine Öffnung des Gehäuses verschließt. Eine besonders vorteilhafte und günstige Variante eines Rückschlagventils stellt das sogenannte Band-Rückschlagventil dar, welches sich einfach und kostengünstig fertigen lässt und welches sehr kompakt im Hydraulikmodul integriert werden kann.

Gemäß einer vorteilhaften Ausgestaltung kann das Rückschlagventil im Inneren des Gehäuses des Umschaltventils angeordnet sein und nach radial innen öffnen. Besonders vorteilhaft kann das Band-Rückschlagventil im Inneren des Umschaltventils integriert werden. Durch die Verwendung des Bandelements als Schließelement lässt sich das Rückschlagventil günstig im Inneren des Gehäuses des Umschaltventils montieren.

Gemäß einer vorteilhaften Ausgestaltung können die Blende und das Rückschlagventil als kombiniertes Element vorgesehen sein. Durch eine solche Kombination von Bauelementen lässt sich eine besonders kompakte Konstruktion des Hydraulikmoduls erreichen.

Gemäß einer vorteilhaften Ausgestaltung kann das Bandelement eine auf einem Umfang des Bandelementes angeordnete radiale Bohrung als Blende aufweisen. Eine solche Bohrung als Blende lässt sich einfach und kostengünstig realisieren. Außerdem ist so eine zuverlässige Funktion der Drosselwirkung der Blende darstellbar.

Gemäß einer vorteilhaften Ausgestaltung kann das Bandelement eine auf dem Umfang des Bandelementes verlaufende Kerbe als Blende aufweisen. Die Alternative der Kerbe als Blende lässt sich ebenfalls einfach und kostengünstig realisieren. Außerdem ist auch so eine zuverlässige Funktion der Drosselwirkung der Blende darstellbar.

Gemäß einer vorteilhaften Ausgestaltung kann das Gehäuse eine dem Umfang des Bandelements zugewandte Kerbe als Blende aufweisen. Alternativ ist es auch möglich, die Blende als Drossel konstruktiv im Gehäuse vorzusehen, indem eine parallel zum Bandelement angeordnete Kerbe in das Innere des Gehäuses eingebracht wird. Auch eine solche Kerbe lässt sich einfach und kostengünstig vorsehen.

Gemäß einer vorteilhaften Ausgestaltung kann das Rückschlagventil in der Versorgungsleitung als Kugelrückschlagventil ausgebildet und in dem Gehäuse des Umschaltventils angeordnet sein und das Gehäuse eine parallel zu einem Hydraulikflüssigkeitspfad des Rückschlagventils verlaufende Kerbe als Blende aufweisen. Die Verwendung einer Kugel als Schließelement des Rückschlagventils ist eine alternative Lösung, ein kostengünstiges Rückschlagventil in einem Hydraulikmodul zu integrieren. Eine parallel zum Hydraulikflüssigkeitspfad des Rückschlagventils verlaufende Ausnehmung, beispielsweise in Form einer Kerbe, kann so eine einfache alternative Lösung der Blende als Drossel für den Hydraulikflüssigkeitspfad darstellen.

Gemäß einer vorteilhaften Ausgestaltung können wenigstens eines der Rückschlagventile und/oder die Blende in das Umschaltventil integriert sein. Eine solche besonders kompakte Anordnung von Rückschlagventilen und/oder der Blende stellt eine einfache wie kostengünstige Lösung zur Darstellung eines Hydraulikmoduls für den vorgesehenen Zweck zum Einsatz in einem Pleuel für eine Brennkraftmaschine mit variabler Verdichtung dar. Damit lässt sich eine kostengünstige Darstellung mit einer robusten und dauerhaft Funktionsweise des Hydraulikmoduls kombinieren.

Gemäß einer vorteilhaften Ausgestaltung kann wenigstens eines der den Zylindern zugeordneten Rückschlagventile als Schließelement ein im Wesentlichen ringförmiges Bandelement mit einem Umfang aufweisen, welches das Gehäuse des Umschaltventils wenigstens teilweise auf seinem Umfang umschließt und am Gehäuse wenigstens teilweise abgestützt ist und welches in einer geschlossenen Position wenigstens eine Öffnung des Gehäuses verschließt. Ein solches Rückschlagventil kann vorteilhaft an der Außenseite des Umschaltventils vorgesehen sein und somit eine besonders kompakte Anordnung eines Rückschlagventils darstellen. Auch ist so ein robustes Verhalten des Rückschlagventils über die Lebensdauer zu erwarten.

Gemäß einer vorteilhaften Ausgestaltung kann das wenigstens eine Rückschlagventil nach radial außen öffnen. Besonders günstig ist eine solche Anordnung eines Band-Rückschlagventils, wenn es von innen nach außen öffnen soll. Damit lässt sich eine besonders kompakte Anordnung des Rückschlagventils an dem Hydraulikmodul erreichen, da das Bandelement eine geringe Dicke nur aufweist.

Gemäß einer vorteilhaften Ausgestaltung kann das Umschaltventil als 3/2-Wegeventil ausgebildet sein. Für die vorgeschlagene Verschaltung eines Hydraulikschaltplans eines Pleuels für eine Brennkraftmaschine mit variabler Verdichtung ist ein Umschaltventil mit drei Eingängen und zwei Ausgängen besonders günstig geeignet und stellt eine besonders kostengünstige Lösung für ein Hydraulikmodul dar. Vorzugsweise sind die Ein- und Ausgänge so kombiniert, dass insgesamt nur drei Anschlüsse vorgesehen sind, d.h. alle drei Anschlüsse dienen jeweils sowohl als Ein- als auch als Ausgang.

Der erfindungsgemäße Pleuel benötigt vorteilhaft nur drei Hydraulikflüssigkeitsleitungen im Pleuel-Grundkörper, wodurch eine günstige Fertigung erreicht werden kann. Weiter wird nur ein 3/2-Wegeventil als Umschaltventil im Hydraulikmodul benötigt, was die Konstruktion des Pleuels vorteilhaft vereinfacht. Die MKS-Hydraulikkammer kann von der GKS-Hydraulikkammer in der ersten Schaltstellung niedriger Verdichtung ε_{low} vorgespannt werden. Günstigerweise werden so nur Differenzvolumina an Hydraulikflüssigkeit zwischen GKS- und MKS-Hydraulikkammer mit der Lagerschale des Pleuels ausgetauscht, d.h. es fließt keine zusätzliche Hydraulikflüssigkeit über die Hydraulikflüssigkeitsleitungen in den Lagerschalen. Rückschlagventile und Drosseln lassen sich günstigerweise konstruktiv in einem Hydraulikmodul integrieren. So kann der Hydraulikschaltplan für beide Varianten ohne, bzw. mit zusätzlichem Rückschlagventil in einem Hydraulikmodul untergebracht werden.

### Kurze Beschreibung der Zeichnungen

Weitere Vorteile ergeben sich aus der folgenden Zeichnungsbeschreibung. In den Zeichnungen sind Ausführungsbeispiele der Erfindung schematisch dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1a: eine erste Ausführungsform eines Hydraulikschaltplans eines Pleuels in einer ersten Schaltstellung ε_{low};
- Fig. 1b: die erste Ausführungsform des Hydraulikschaltplans in einer zweiten Schaltstellung ε_{high};
- Fig. 2a: eine zweite Ausführungsform eines Hydraulikschaltplans eines Pleuels in einer ersten Schaltstellung ε_{low};
- Fig. 2b: die zweite Ausführungsform des Hydraulikschaltplans in einer zweiten Schaltstellung ε_{high};
- Fig. 3: eine erste Ansicht eines Hydraulikmoduls;
- Fig. 4: einen perspektivischen Teilschnitt des Hydraulikmoduls gemäß Fig. 3 in der ersten Schaltstellung ε_{low};
- Fig. 5: eine zweite Ansicht des Hydraulikmoduls gemäß Fig. 3;
- Fig. 6: eine perspektivische Ansicht des Hydraulikmoduls gemäß Fig. 3;
- Fig. 7: einen Schnitt A-A des Hydraulikmoduls gemäß Fig. 3 in der ersten Schaltstellung ε_{low};
- Fig. 8: einen Schnitt B-B des Hydraulikmoduls gemäß Fig. 3 in der ersten Schaltstellung ε_{low};
- Fig. 9: einen Schnitt C-C des Hydraulikmoduls gemäß Fig. 3 in der ersten Schaltstellung ε_{low};
- Fig. 10: einen Schnitt D-D des Hydraulikmoduls gemäß Fig. 3 in der ersten Schaltstellung ε_{low};
- Fig. 11: einen Schnitt E-E des Hydraulikmoduls gemäß Fig. 3 in der ersten Schaltstellung ε_{low};
- Fig. 12: einen perspektivischen Teilschnitt des Hydraulikmoduls gemäß Fig. 3 in der zweiten Schaltstellung ε_{high};
- Fig. 13: einen Schnitt A-A des Hydraulikmoduls gemäß Fig. 3 in der zweiten Schaltstellung ε_{high};
- Fig. 14: einen Schnitt B-B des Hydraulikmoduls gemäß Fig. 3 in der zweiten Schaltstellung ε_{high};
- Fig. 15: einen Schnitt C-C des Hydraulikmoduls gemäß Fig. 3 in der zweiten Schaltstellung ε_{high};
- Fig. 16: einen Schnitt D-D des Hydraulikmoduls gemäß Fig. 3 in der zweiten Schaltstellung ε_{high};
- Fig. 17: einen Schnitt E-E des Hydraulikmoduls gemäß Fig. 3 in der zweiten Schaltstellung ε_{high};
- Fig. 18: eine erste Ansicht eines Bandelements eines Rückschlagventils des Hydraulikmoduls gemäß Fig. 3;
- Fig. 19: eine zweite Ansicht des Bandelements des Rückschlagventils gemäß Fig. 18;
- Fig. 20: eine perspektivische Ansicht des Bandelements des Rückschlagventils gemäß Fig. 18;
- Fig. 21: einen Schnitt A-A des Bandelements des Rückschlagventils gemäß Fig. 18;
- Fig. 22: einen Schnitt B-B des Bandelements des Rückschlagventils gemäß Fig. 18;
- Fig. 23: eine erste Ansicht eines weiteren Ausführungsbeispiels eines Bandelements eines Rückschlagventils für ein erfindungsgemäßes Hydraulikmodul;
- Fig. 24: eine zweite Ansicht des Bandelements des Rückschlagventils gemäß Fig. 23;
- Fig. 25: eine perspektivische Ansicht des Bandelements des Rückschlagventils gemäß Fig. 23;

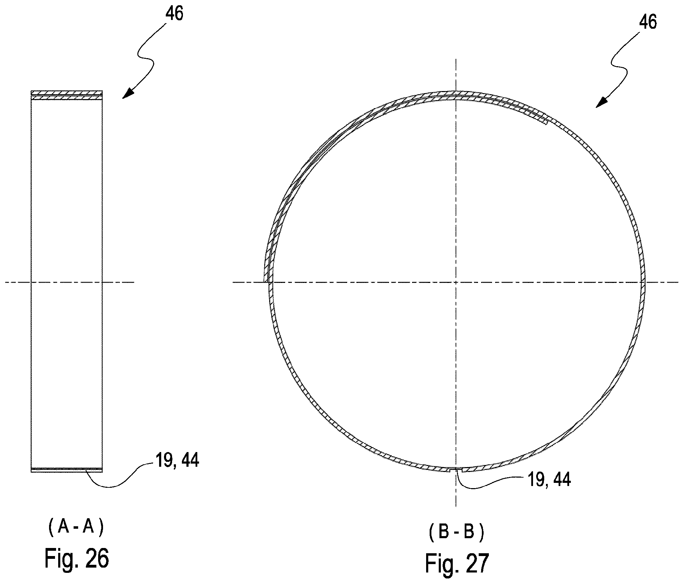

- Fig. 26: einen Schnitt A-A des Bandelements des Rückschlagventils gemäß Fig. 23; und
- Fig. 27: einen Schnitt B-B des Bandelements des Rückschlagventils gemäß Fig. 23.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

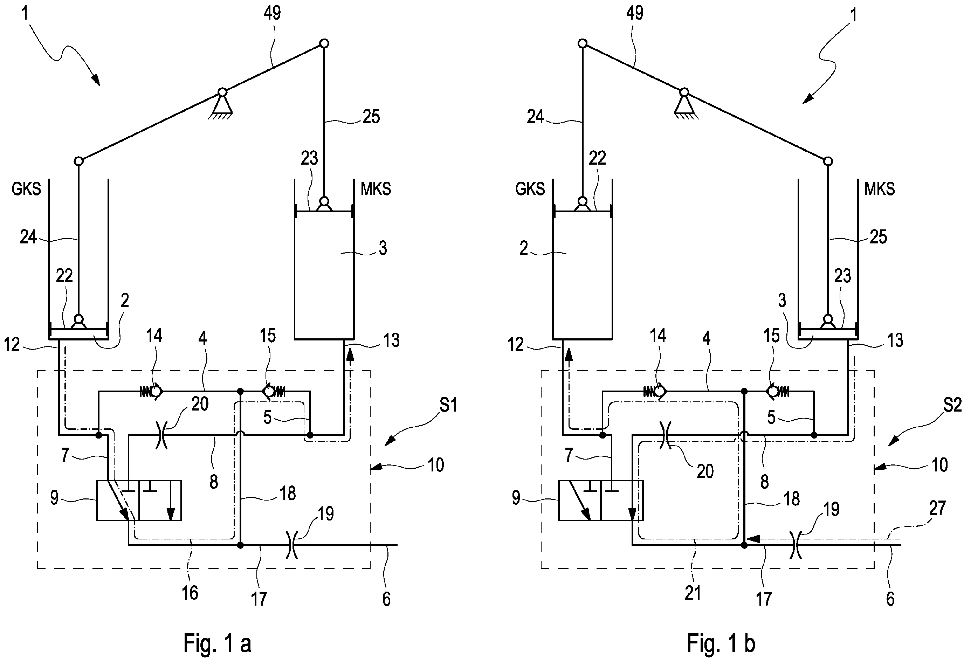

Den Figuren 1a und 1b ist ein erstes Ausführungsbeispiel eines Hydraulikschaltplans eines Pleuels 1 mit einem erfindungsgemäßen Hydraulikmodul 10 in der ersten Schaltstellung ε_{low} (S1) (Figur 1a) und in der zweiten Schaltstellung ε_{high} (S2) (Figur 1b) zu entnehmen. Der Pleuel 1, in welchem das erfindungsgemäße Hydraulikmodul 10 vorteilhafterweise Anwendung findet, ist in diesen Figuren nur schematisch dargestellt. Der grundsätzliche Aufbau und dessen Funktion sind jedoch aus der DE 10 2013 107 127 A1 bekannt, auf welche ausdrücklich Bezug genommen wird.

Das gestrichelt angedeutete Hydraulikmodul 10 umfasst ein Umschaltventil 9 zum Steuern eines Hydraulikflüssigkeitsstroms des Pleuels 1 für eine Brennkraftmaschine mit variabler Verdichtung mit einer Exzenter-Verstelleinrichtung zur Verstellung einer effektiven Pleuelstangenlänge. Die Exzenter-Verstelleinrichtung weist einen ersten Zylinder 2 und einen zweiten Zylinder 3 als Hydraulikkammern auf, wobei sowohl jeweils ein Zulauf 4, 5 zum Zuführen von Hydraulikflüssigkeit in die Zylinder 2, 3 als auch jeweils ein Ablauf 7, 8 zum Abführen von Hydraulikflüssigkeit von den Zylindern 2, 3 vorgesehen sind. Die Zuläufe 4, 5 wie auch das Umschaltventil 9 sind mit einer Versorgungsleitung 6 des Pleuels 1 verbunden. In die Zylinder 2, 3 münden die Zuläufe 4, 5 und Abläufe 7, 8 jeweils als gemeinsame Leitung 12, 13.

Das Umschaltventil 9, welches nachfolgend näher beschrieben und in den weiteren Figuren im Detail dargestellt ist, weist einen beweglichen Kolben 11 auf, welcher wahlweise in die erste Schaltstellung S1 oder die zweite Schaltstellung S2 verlagerbar ist, wobei die Zylinder 2, 3 derart verbunden sind, dass in der ersten Schaltstellung S1 Hydraulikflüssigkeit aus dem ersten Zylinder 2 in den zweiten Zylinder 3 und in der zweiten Schaltstellung S2 Hydraulikflüssigkeit aus dem zweiten Zylinder 3 in den ersten Zylinder 2 leitbar ist.

Der erste Zylinder 2 stellt dabei eine Hydraulikkammer auf der Gaskraftseite (GKS) des Pleuels 1 dar, während der zweite Zylinder 3 eine Hydraulikkammer auf der Massenkraftseite (MKS) des Pleuels 2 darstellt.

Den Zylindern 2, 3 ist jeweils ein in den Zuläufen 4, 5 angeordnetes Rückschlagventil 14, 15 zugeordnet, welches ein Zuführen von Hydraulikflüssigkeit in die Zylinder 2, 3 ermöglicht und ein Abführen von Hydraulikflüssigkeit von den Zylindern 2, 3 verhindert.

Beim Schaltvorgang von ε_{high} nach ε_{low} wird, wie in Fig. 1a dargestellt, die Hydraulikflüssigkeit aus dem ersten Zylinder 2 über das als 3/2-Wege-Ventil ausgebildete Umschaltventil 9 vor das Rückschlagventil 15 des zweiten Zylinders 3 geleitet, wie durch den Pfeil 16 in Fig. 1a dargestellt ist. Das Rückschlagventil 15 wird durch den Strom der Hydraulikflüssigkeit geöffnet. Die Hydraulikflüssigkeit durchströmt ausgehend vom Zylinder 2 die Leitung 12, den Ablauf 7, das Umschaltventil 9, eine Versorgungsleitung 17 der Hydraulikmodul 10, eine Verbindungsleitung 18 zwischen der Versorgungsleitung 17 und dem zweiten Zulauf 5, den zweiten Zulauf 5 sowie die Leitung 13 in den zweiten Zylinder 3. Das Differenzvolumen der beiden Zylinder 2, 3 kann dabei über eine Blende 19 als Drossel in der Versorgungsleitung 17 in die Versorgungsleitung 6 des Pleuels 1 und weiter z.B. in eine Lagerschale des Pleuels 1 abfließen. Es ist somit ein Vorspannen des zweiten Zylinders 3 (MKS-Kammer) durch den Druck des ersten Zylinders 2 (GKS-Kammer) gewährleistet.
Die Blende 19 bewirkt dabei vorteilhaft, dass sich vor dem Rückschlagventil 15 ein Druck aufbaut und damit der zweite Zylinder 3 sicher befüllt werden kann. Der zweite Zylinder 3 wird sozusagen vorgespannt.

Beim Schalten von ε_{low} (S1) nach ε_{high} (S2) wird, wie in Fig. 1b dargestellt, die Hydraulikflüssigkeit aus dem zweiten Zylinder 3 über eine weitere Blende 20 als Drossel im Ablauf 8 des zweiten Zylinders 3 vor das Rückschlagventil 14 des ersten Zylinders 2 geleitet, dargestellt durch einen Pfeil 21. Das Rückschlagventil 14 wird durch den Strom der Hydraulikflüssigkeit geöffnet. Das Hydraulikflüssigkeitsvolumen aus der Differenz der Kammervolumina wird über die Versorgungsleitung 6 aus der Lagerschale nachgesaugt. Dabei kann Hydraulikflüssigkeit gedrosselt über die Blende 19 als Drossel in das System einströmen (Pfeil 27).

Die Durchmesser der Blenden 19, 20 sind derart gewählt, dass der Schaltvorgang von ε_{low} nach ε_{high} ausreichend langsam ist, um Beschädigungen des Pleuels 1 zu vermeiden, wobei gleichzeitig für den Schaltvorgang in die entgegengesetzte Richtung eine ausreichende hydraulische Vorspannung der MKS-Kammer 3 eingestellt wird.

Das erfindungsgemäße hydraulische Konzept gewährleistet, dass in der Schaltstellung ε_{low} das System in einem hydraulisch eingespannten Zustand vorliegt. Das bedeutet, dass die Hydraulikflüssigkeit aus der größeren GKS-Kammer 2 direkt in die MKS-Kammer 3 geleitet wird, wobei überschüssige Hydraulikflüssigkeit über eine Blende als Drosselstelle in die Lagerschale abgeführt wird.

Gleichzeitig ist für den Schaltvorgang von ε_{low} nach ε_{high} gewährleistet, dass das System stets mit einer ausreichenden Menge Hydraulikflüssigkeit versorgt ist, so dass der Druck nicht zu weit einbricht, da ein Druckeinbruch direkt das Ausgasen von Luft aus der Hydraulikflüssigkeit zur Folge hätte, wodurch das System die hydraulische Einspannung verliert. Dies kann eine unerwünschte Destabilisierung des Hebelsystems zur Folge haben. Das heißt, der Hebel der Exzenter-Verstelleinrichtung kann während einer Umdrehung der Kurbelwelle eine große Amplitude ausführen, welche zu nahezu ungedämpften Schlägen von Kolben 22, 23 auf einen Kammerboden oder die Ölsäule führt und schließlich sehr große Druckspitzen im System verursacht. Die Kolben 22, 23 sind über Exzenterstangen 24, 25 mit einem Hebel 49 der Exzenter-Verstelleinrichtung verbunden.

Das System ist insgesamt der Art verschaltet, dass die Steuerung mittels des Hydraulikmoduls 10 möglich ist, welches alle funktionellen Bestandteile, einschließlich Umschaltventil 9 und Rückschlagventilen 14, 15, enthält. Der gezeigte Hydraulikschaltplan gemäß den Fig. 1a und 1b ermöglicht trotz eines stark begrenzten Einbauraums eine konstruktive, fertigbare Umsetzung des Hydraulikmoduls 10. Zur Robustheitssteigerung ist dabei der Verrohrungs-, bzw. Bohrungsaufwand im Pleuel-Grundkörper vorteilhafterweise möglichst gering gehalten.

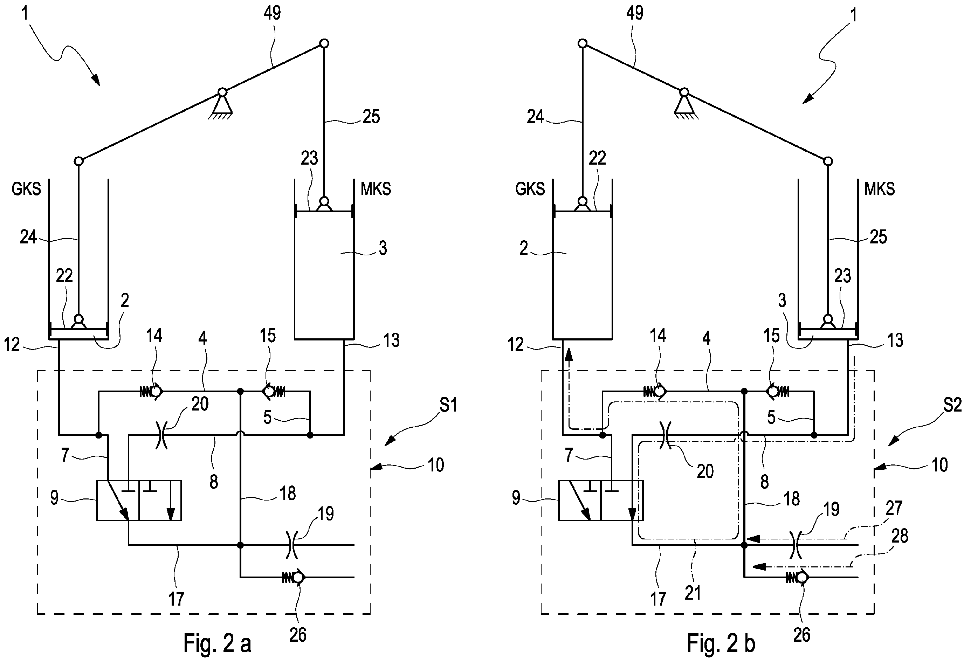

Den Figuren 2a und 2b ist ein zweites Ausführungsbeispiel eines Hydraulikschaltplans eines Pleuels 1 mit einem erfindungsgemäßen Hydraulikmodul 10 in der ersten Schaltstellung ε_{low} (S1) (Figur 2a) und in der zweiten Schaltstellung ε_{high} (S2) (Figur 2b) zu entnehmen.

Es ist hier parallel zur Blende 19 als Drossel in der Versorgungsleitung 17 ein weiteres Rückschlagventil 26 vorgesehen.

In ε_{low} ist die GKS-Ablaufbohrung 7 mit der Versorgungsleitung 6 innerhalb des Umschaltventils 9 idealerweise ungedrosselt verbunden. Das hohe Druckpotential auf der GKS-Seite wird genutzt und vor das MKS-Rückschlagventil 15 gebracht. Dies ist in der Regel wesentlich größer als das Druckpotential aus Versorgungsleitung 6 und erzeugt in der MKS-Kammer 3 ein gewisses Grunddruckpotential, was die Steifigkeit der Kammer 3 und damit die Lagestabilität in der Stellung ε_{low} erhöht. Dieser Effekt ist nur gegeben, wenn die GKS-Kammer 2 größer ist als die MKS-Kammer 3. Dies bedeutet aber auch, dass das Differenzvolumen in die Lagerschale des Pleuels 1 geleitet werden muss, da sonst eine vollständige Verstellung nicht möglich ist. Der Ablauf ist nur über die Drosselbohrung im versorgungsseitigen Rückschlagventil 26 möglich und begrenzt den Volumenstrom und damit die Verstellgeschwindigkeit von ε_{high} nach ε_{low}.

Für den Schaltvorgang von ε_{high} nach ε_{low} ergibt sich kein Unterschied zur ersten Ausführungsform des Hydraulikschaltplans gemäß Figur 1a.

In der in Figur 2b dargestellten Gegenverstellrichtung von ε_{low} nach ε_{high} kann nun auch über das weitere Rückschlagventil 26 Hydraulikflüssigkeit in das System nachgesaugt werden, was durch den Pfeil 28 verdeutlicht ist. Hierdurch wird verhindert, dass das System über Leckagestellen Luft ansaugt oder ein Vakuum in der GKS-Kammer 2 gezogen wird. Dieser Zustand wird als problematisch erachtet, da dadurch sehr große, ungewollte Verstellwinkel am Hebel 49 entstehen können.

In der Schaltstellung ε_{high} ist die MKS-Ablaufbohrung 8 mit der Versorgungsleitung 6 verbunden. Ablaufende Hydraulikflüssigkeit aus der MKS-Kammer 3 kann von der GKS-Kammer 2 über das Rückschlagventil 14 direkt wieder aufgenommen werden. Ist das MKS-Kammervolumen kleiner als das GKS-Kammervolumen wird das Differenzvolumen über das versorgungsseitige Rückschlagventil 26 nachgefördert. Der MKS-Ablauf erfolgt gedrosselt, um die Verstellgeschwindigkeit von ε_{low} nach ε_{high} zu begrenzen. In ε_{high} ist die GKS-Ablaufbohrung 7 verschlossen.

Hydraulikflüssigkeit durch Leckage, die am Stufenkolben 11 des Umschaltventils 9 auftreten kann, kann einfach durch Bohrungen 51 in den Verschlussdeckeln 50 Richtung Tankabfluss abfließen.

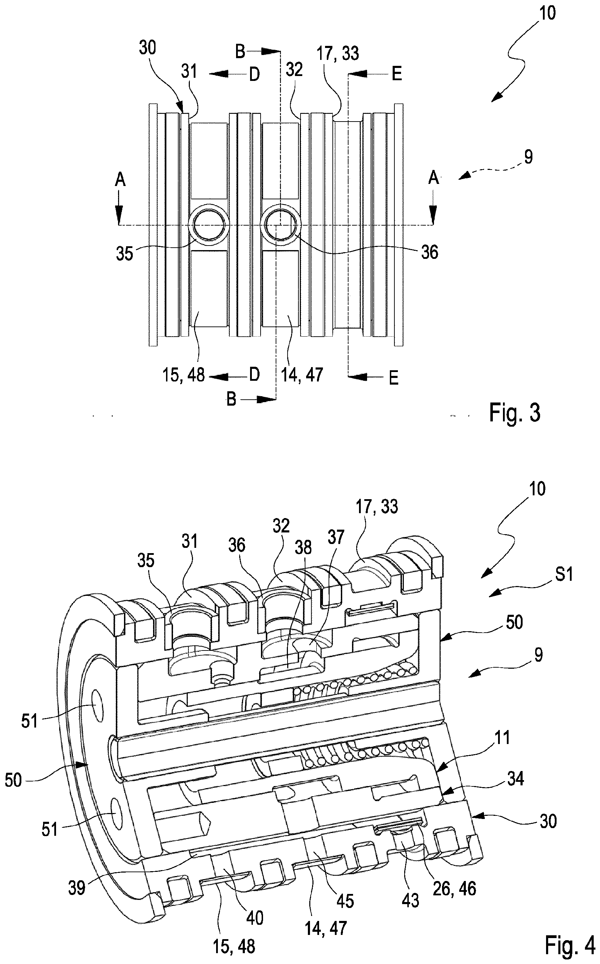

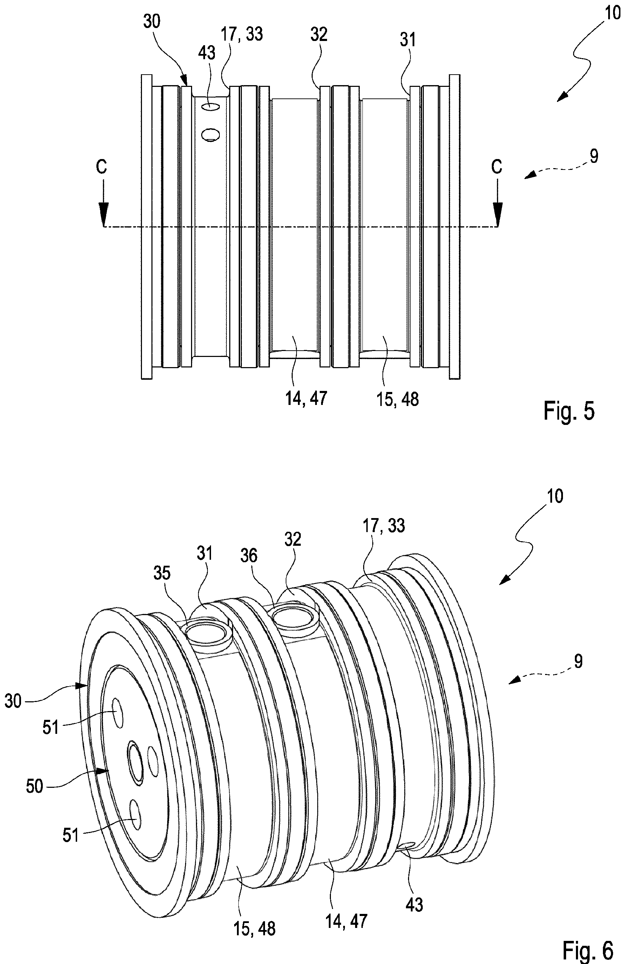

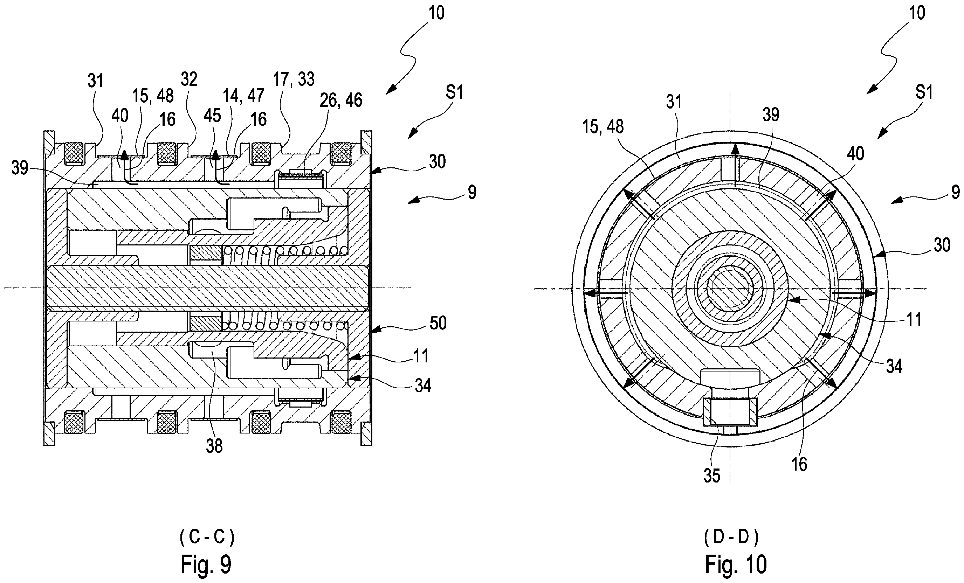

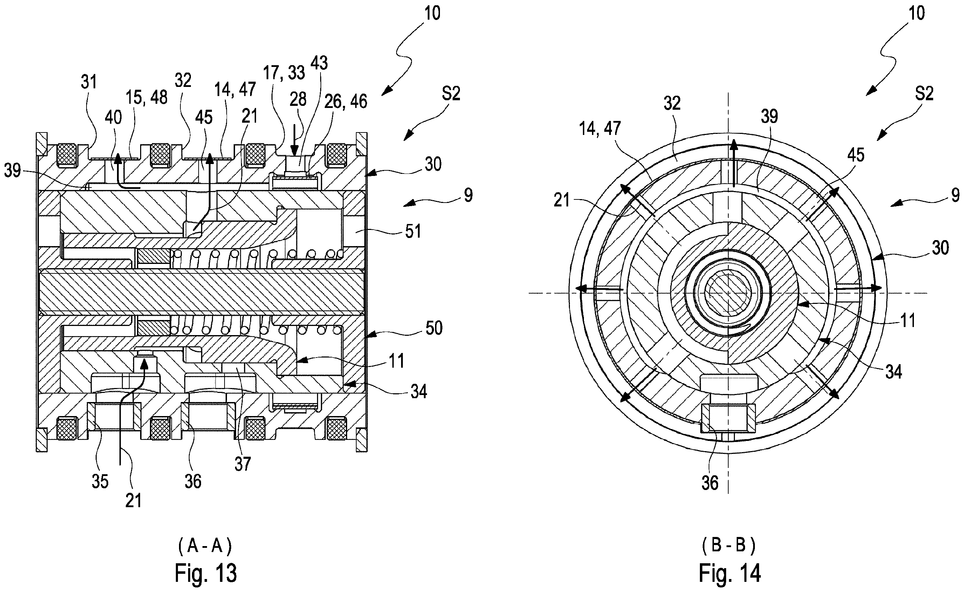

Den Figuren 3 bis 17 ist ein Hydraulikmodul 10 in verschiedenen Ansichten, Schnitten und den beiden Schaltstellungen S1 und S2 zu entnehmen, in welchem das zweite Ausführungsbeispiel des Hydraulikschaltplans gemäß den Figuren 2a und 2b konstruktiv umgesetzt ist.

Das Hydraulikmodul 10 mit einem Umschaltventil 9 zum Steuern eines Hydraulikflüssigkeitsstroms eines Pleuels 1 für eine Brennkraftmaschine mit variabler Verdichtung mit einer Exzenter-Verstelleinrichtung zur Verstellung einer effektiven Pleuelstangenlänge weist einen beweglichen Kolben 11 des Umschaltventils 9 auf, welcher wahlweise in eine erste Schaltstellung S1 oder eine zweite Schaltstellung S2 verlagerbar ist. Dadurch kann in der ersten Schaltstellung S1 Hydraulikflüssigkeit aus dem ersten Zylinder 2 in den zweiten Zylinder 3 geleitet werden und in der zweiten Schaltstellung S2 Hydraulikflüssigkeit aus dem zweiten Zylinder 3 in den ersten Zylinder 2 leitbar ist. Das Umschaltventil 9 ist als 3/2-Wegeventil ausgebildet.

Die beiden Rückschlagventile 14, 15 und die Blende 20 sind in das Umschaltventil 9 integriert. Die Rückschlagventile 14, 15 weisen als Schließelement ein im Wesentlichen ringförmiges Bandelement 47, 48 mit einem Umfang auf, welches das Gehäuse 30 des Umschaltventils 9 wenigstens teilweise auf seinem Umfang umschließt und am Gehäuse 30 wenigstens teilweise abgestützt ist. Das Bandelement 47, 48 verschließt in einer geschlossenen Position jeweils die Öffnungen 45, 40 des Gehäuses 30. Die Rückschlagventile 14, 15 öffnen dabei nach radial außen.

Den Figuren 4 und 7 bis 11 ist die erste Schaltstellung S1 (ε_{low}) des Hydraulikmoduls 10 zu entnehmen. Das Hydraulikmodul 10 weist ein Gehäuse 30 mit als umlaufende Ringnuten ausgebildeten Arbeitsanschlüssen 31, 32 auf, wobei dem ersten Arbeitsanschluss 31 die Leitung 13 des zweiten Zylinders 3 und dem zweiten Arbeitsanschluss 32 die Leitung 12 des ersten Zylinders 2 zugeordnet ist. Die Rückschlagventile 14 und 15 sind als Band-Rückschlagventile in den Ringnuten mittels Verdrehsicherungen 35, 36 positioniert. Die Verdrehsicherungen 35, 36 bilden gleichzeitig die Abläufe 7, 8 der Zylinder 2, 3. Die Versorgungsleitung 17 ist ebenfalls als umlaufende Ringnut 33 vorgesehen.
Wie aus den Figuren ersichtlich ist, sind Ein- und Ausgänge so kombiniert, dass insgesamt nur drei Anschlüsse 17, 31, 32 vorgesehen sind, d.h. alle drei Anschlüsse 17, 31, 32 dienen jeweils sowohl als Ein- als auch als Ausgang.

Der Kolben 11 des Hydraulikmoduls 10 ist als Stufenkolben ausgebildet, welcher in der gezeigten Schaltstellung S1 (ε_{low}) seine in der Zeichnung rechte Endlage einnimmt. Der Kolben 11 ist in einer im Gehäuse 30 angeordneten Laufbuchse 34 axial verschiebbar vorgesehen.

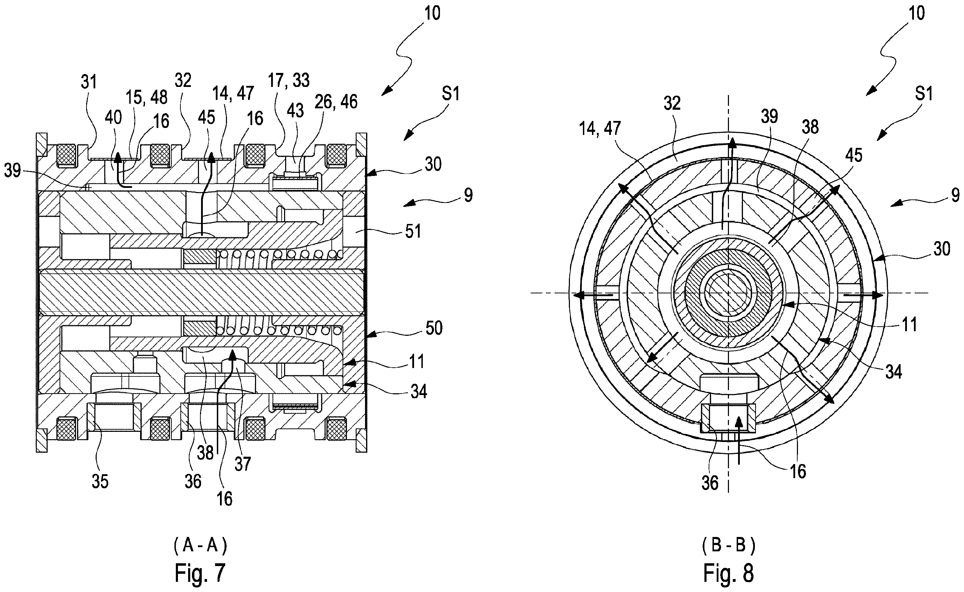

Insbesondere aus Figuren 7 bis 11 ist der bereits zu den Figuren 1a und 1b beschriebene, als Pfeil bzw. Teilpfeile 16 dargestellte Hydraulikfluidstrom zu entnehmen.

Durch die gezeigte Endlage des Kolbens 11 kann Hydraulikflüssigkeit von dem ersten Zylinder 2 über die Verdrehsicherung 36 und eine Öffnung 37 der Laufbuchse 34 in einen den Kolben 11 umgebenden Ringraum 38 hineinfließen. Dieser Ringraum 38 ist mit einem Hinterschnitt 39 des Gehäuses 30 verbunden, welcher vorzugsweise 286° des Innenumfangs des Gehäuses 30 umfasst. Der Hinterschnitt 39 ist über Öffnungen 40 im Gehäuse 30 mit der Ringnut 33 verbunden und das Hydraulikfluid öffnet das Rückschlagventil 15.

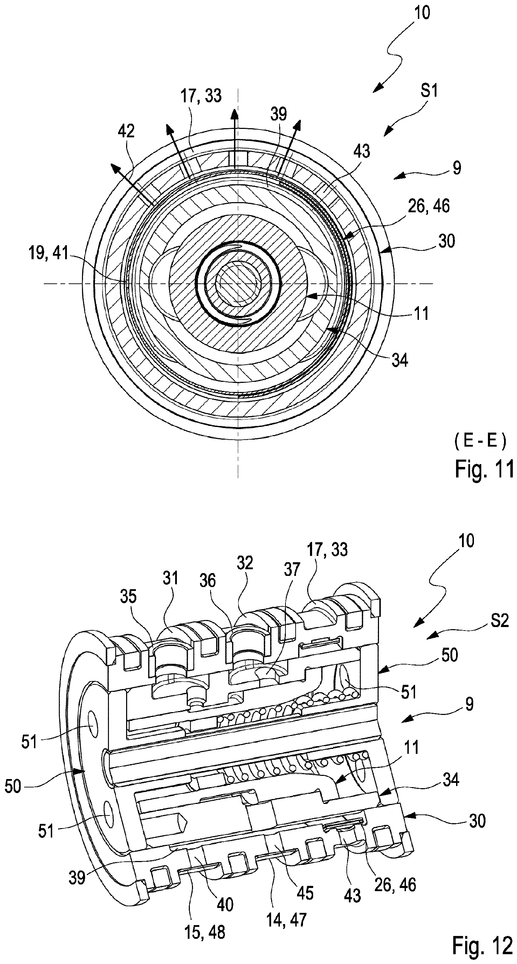

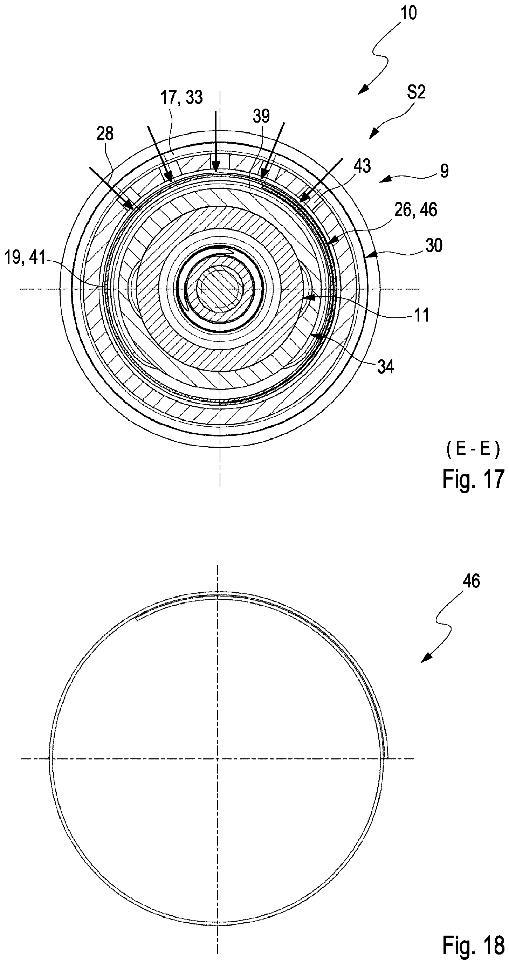

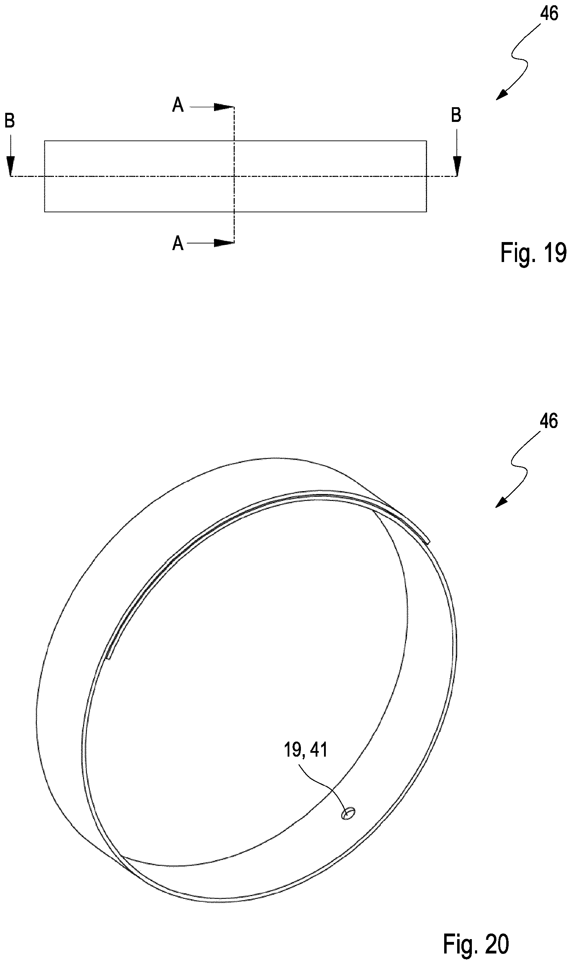

Aus Figur 11 ist das Rückschlagventil 26 als Band-Rückschlagventil ersichtlich, welches in den Figuren 18 bis 20 mit dem Bandelement 46 als Einzelteil vergrößert dargestellt ist und in einem Hinterschnitt des Gehäuses 30 anliegt. Das Rückschlagventil 26 weist als Schließelement ein im Wesentlichen ringförmiges Bandelement 46 auf, welches an dem Gehäuse 30 des Umschaltventils 9 wenigstens teilweise abgestützt ist und welches in einer geschlossenen Position wenigstens eine Öffnung 43 des Gehäuses 30 verschließt. Das Rückschlagventil 26 ist demzufolge im Inneren des Gehäuses 30 des Umschaltventils 9 angeordnet und öffnet nach radial innen.

Das Rückschlagventil 26 ist in diesem Ausführungsbeispiel mit der Blende 19 als Drossel kombiniert vorgesehen und weist als Blende 19 eine Bohrung 41 auf, durch welche in der gezeigten Stellung Hydraulikflüssigkeit gedrosselt über Öffnungen 43 des Gehäuses 30 in die Versorgungsleitung 6 des Pleuels 1 abfließen kann (Pfeil 42). Das Rückschlagventil 26 bleibt dabei geschlossen und verhindert so, dass Hydraulikflüssigkeit abfließen kann.

In einer alternativen Ausführungsform könnte das Rückschlagventil 26 als Kugelrückschlagventil ausgebildet und in dem Gehäuse 30 des Umschaltventils 9 angeordnet sein, wobei das Gehäuse 30 eine parallel zu einem Hydraulikflüssigkeitspfad des Rückschlagventils 26 verlaufende Kerbe als Blende 19 aufweisen könnte.

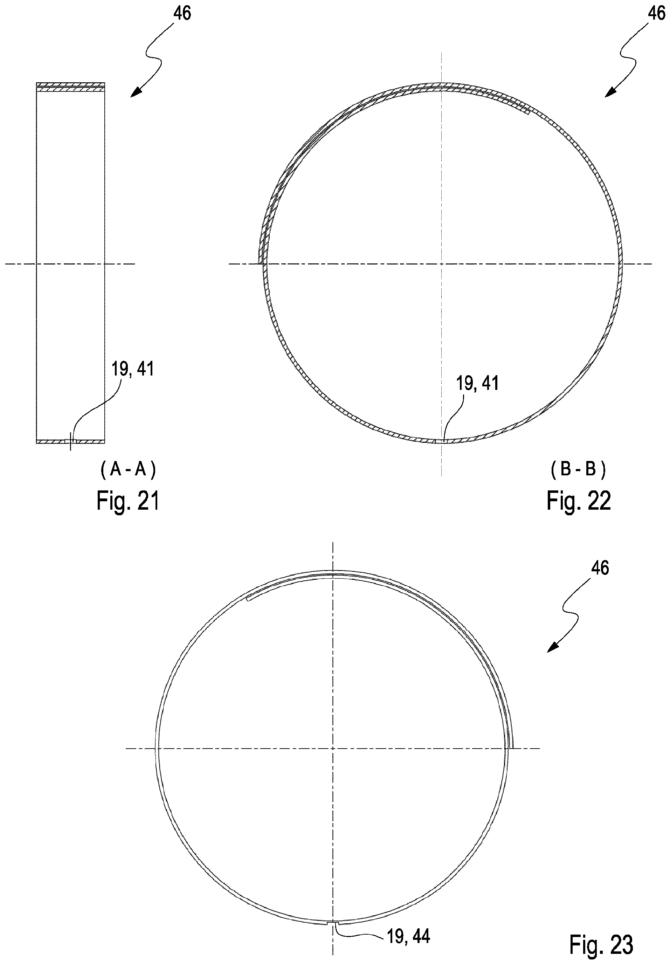

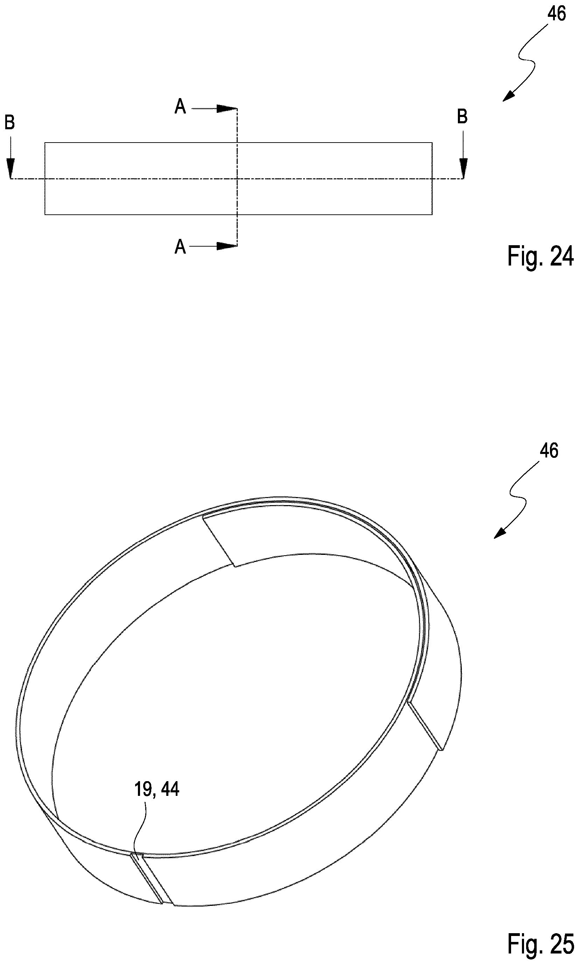

Den Figuren 23 bis 25 ist ein weiteres Ausführungsbeispiel für das Bandelement 46 des Rückschlagventils 26 zu entnehmen. Im Unterschied zum ersten Ausführungsbeispiel weist dieses eine Kerbe 44 als Drossel 19 auf.

In einer alternativen Ausführungsform könnte das Gehäuse 30 eine dem Umfang des Bandelements 46 zugewandte Kerbe als Blende 19 aufweisen.

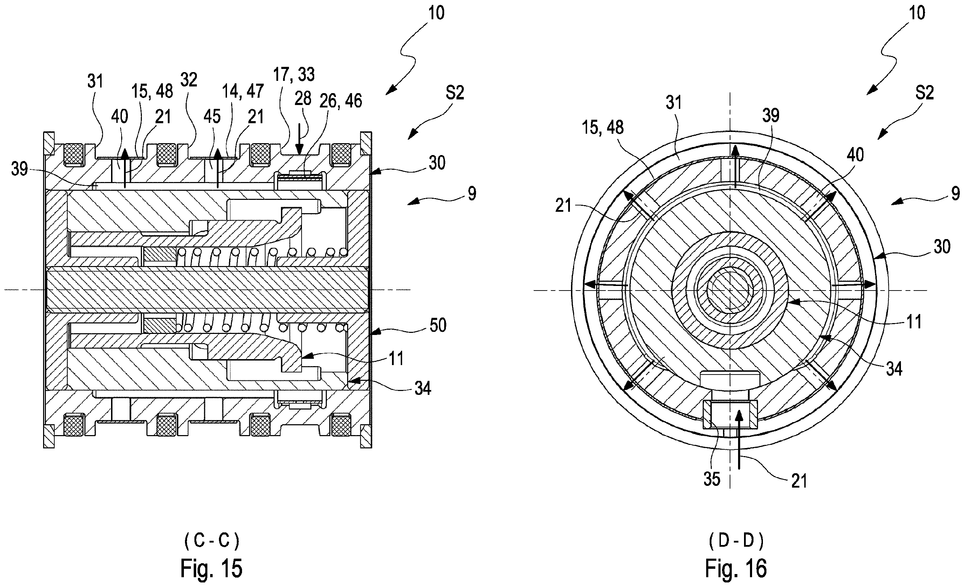

Die Figuren 12 bis 17 zeigen die zweite Schaltstellung S2 (ε_{high}), in welcher sich der Kolben 11 in seiner in der Zeichnung linken Endlage befindet. In dieser Schaltstellung wird Hydraulikflüssigkeit von dem zweiten Zylinder 3 in den ersten Zylinder 2 geleitet, was durch den Pfeil bzw. die Teilpfeile 21 dargestellt ist. Gleichzeitig kann Hydraulikflüssigkeit über das Rückschlagventil 26 nachgesaugt werden (Pfeil 28), wie insbesondere aus Fig. 15 deutlich hervorgeht.

Die Funktionsweise des Umschaltventils 9 ist analog zum bekannten bistabilen Schalter der DE 10 2013 107 127 A1 zu betrachten, d.h. der Kolben 11 besitzt zwei Endlagen und öffnet/schließt dabei jeweils eine Leitung zu den Zylindern 2, 3. Überschreitet der Galeriedruck, der an einer ersten Druckfläche des Kolbens 11 in ε_{high} anliegt, einen bestimmten Wert, beginnt der Kolben 11 sich zu bewegen. Ab einem bestimmten Weg wird eine zweite Druckfläche hinzugeschaltet und der Kolben 11 springt in die Endposition ε_{low}. Der Druck um den Kolben 11 zurückzuschalten, liegt wesentlich niedriger als der Druck, der erforderlich ist, um den Kolben in ε_{low} zu bewegen. Dadurch entsteht ein Bereich, in dem beide Kolbenpositionen stabil gehalten werden (bistabiler Bereich).

In beiden Kolbenstellungen sind die nach außen öffnenden Rückschlagventile 14, 15 im GKS- und MKS-Ringkanal 31, 32 mit der Versorgungsleitung 17 verbunden, was durch den 286°-Hinterschnitt des Gehäuses 30 ermöglicht wird. Die Band-Rückschlagventile 14, 15 werden von den Positionsringen bzw. Verdrehsicherungen 35, 36 verdrehsicher positioniert und von den Bohrungen bzw. Öffnungen 40, 45 radial angeströmt. In den Positionsringen 35, 36 ist eine Bohrung, durch welche Hydraulikflüssigkeit aus den Zylindern 2, 3 zurück in das Hydraulikmodul 10 fließen kann.

Durch den 286°-Hinterschnitt sind die Zuläufe 4, 5 und Abläufe 7, 8 geometrisch voneinander getrennt. Die Laufbuchse 34 wird in das Gehäuse 30 eingepresst.

Die Bandelemente 46 der Band-Rückschlagventile 14, 15 sind axial relativ eng geführt, da die Hydraulikflüssigkeit tangential am inneren Radius der durch den Druck aufgebogenen Band-Rückschlagventile 14, 15 vorbeiströmen kann.

Hinter dem Zulauf der Versorgungsleitung 6 ist ebenfalls ein Band-Rückschlagventil 26 mit einer Bohrung 41 in dem Bandelement 46 angeordnet, welches aber nach innen öffnend angeordnet ist. Das bewirkt, dass Hydraulikflüssigkeit aus der Ölgalerie ungedrosselt in das Hydraulikmodul 10 fließen kann, aber nur abhängig von der Größe der Bohrung 41 gedrosselt aus dem Hydraulikmodul 10 wieder herausfließen kann. Das Band-Rückschlagventil 26 liegt in einem Hinterschnitt in dem Gehäuse 30 und dichtet einen ringförmigen kleineren Hinterschnitt ab. Durch diesen Hinterschnitt ist gewährleistet, dass unabhängig von der Winkellage des Band-Rückschlagventils 26, welches nicht verdrehsicher eingebaut ist, die Ablaufbohrung stets mit der Versorgungsleitung 6 des Pleuels 1 verbunden ist. Die Anströmung des Band-Rückschlagventils 26 erfolgt asymmetrisch, um das Band-Rückschlagventil 26 in eine Lage zu drücken. Dies weist gegenüber einer symmetrischen Anströmung des Band-Rückschlagventils 26 von allen Seiten den Vorteil auf, dass ein mögliches Taumeln vermieden wird. Das Band-Rückschlagventil 26 hat in dem Hinterschnitt ein relativ großes axiales Spiel, damit die Hydraulikflüssigkeit seitlich vorbeifließen kann.

Der erfindungsgemäße Pleuel 1 benötigt vorteilhaft nur drei Hydraulikflüssigkeitsleitungen im Pleuel-Grundkörper, wodurch eine günstige Fertigung erreicht werden kann. Weiter wird nur ein 3/2-Wegeventil als Umschaltventil 9 im Hydraulikmodul 10 benötigt, was die Konstruktion des Pleuels 1 vorteilhaft vereinfacht. Die MKS-Hydraulikkammer 3 kann von der GKS-Hydraulikkammer 2 in der ersten Schaltstellung S1 niedriger Verdichtung ε_{low} vorgespannt werden. Günstigerweise werden so nur Differenzvolumina an Hydraulikflüssigkeit zwischen GKS- und MKS-Hydraulikkammer 2, 3 mit der Lagerschale des Pleuels 1 ausgetauscht, d.h. es fließt keine zusätzliche Hydraulikflüssigkeit über die Hydraulikflüssigkeitsleitungen in den Lagerschalen. Rückschlagventile 14, 15 und Drosseln 19, 20 lassen sich günstigerweise konstruktiv in dem Hydraulikmodul 10 integrieren. So kann der Hydraulikschaltplan für beide Varianten ohne, bzw. mit zusätzlichem Rückschlagventil 26 in einem Hydraulikmodul 10 untergebracht werden.

## Patentansprüche

1. Pleuel (1) für eine Brennkraftmaschine mit variabler Verdichtung mit einer Exzenter-Verstelleinrichtung zur Verstellung einer effektiven Pleuelstangenlänge umfassend ein Hydraulikmodul (10) mit einem Umschaltventil (9) zum Steuern eines Hydraulikflüssigkeitsstroms des Pleuels (1),
wobei die Exzenter-Verstelleinrichtung wenigstens einen ersten Zylinder (2) und einen zweiten Zylinder (3) als Hydraulikkammern aufweist und wobei jeweils eine Leitung (12, 13) als gemeinsamer Zu- und Ablauf (4, 5, 7, 8) in die Zylinder (2, 3) mündet, wobei der Zulauf (4, 5) zum Zuführen von Hydraulikflüssigkeit in die Zylinder (2, 3) und der Ablauf (7, 8) zum Abführen von Hydraulikflüssigkeit von den Zylindern (2, 3) vorgesehen sind,
wobei den Zylindern (2, 3) jeweils ein Rückschlagventil (14, 15) zugeordnet ist, welches im Zulauf (4, 5) angeordnet ein Zuführen von Hydraulikflüssigkeit in die Zylinder (2, 3) ermöglicht und ein Abführen von Hydraulikflüssigkeit von den Zylindern (2, 3) verhindert,
wobei das Umschaltventil (9) einen beweglichen Kolben (11) aufweist, welcher wahlweise in eine erste Schaltstellung (S1) oder eine zweite Schaltstellung (S2) verlagerbar ist,
wobei ein Kammervolumen des zweiten Zylinders (2) kleiner als ein Kammervolumen des ersten Zylinders (3) ist und die Zylinder (2, 3) derart verbunden sind, dass in der ersten Schaltstellung (S1) Hydraulikflüssigkeit aus dem ersten Zylinder (2) in den zweiten Zylinder (3) leitbar ist, wobei in der zweiten Schaltstellung (S2) Hydraulikflüssigkeit aus dem zweiten Zylinder (3) in den ersten Zylinder (2) leitbar ist, **dadurch gekennzeichnet, dass** eine Versorgungsleitung (17) des Umschaltventils (9) eine Blende (19) als Drossel aufweist, über welche in der ersten Schaltstellung (S1) ein Differenzvolumen der Zylinder (2, 3) gedrosselt abfließen und in der zweiten Schaltstellung (S2) ein Differenzvolumen der Zylinder (2, 3) gedrosselt nachgesaugt werden kann, wobei der Ablauf (8) des zweiten Zylinders (3) wenigstens eine Blende (20) als Drossel aufweist.

2. Pleuel (1) nach Anspruch 1, **dadurch gekennzeichnet, dass** in der Versorgungsleitung (17) parallel zur Blende (19) ein Rückschlagventil (26) vorgesehen ist, welches ein Zuführen von Hydraulikflüssigkeit in das Umschaltventil (9) ermöglicht und ein Abführen von Hydraulikflüssigkeit verhindert.

3. Pleuel (1) nach Anspruch 2, **dadurch gekennzeichnet, dass** das Rückschlagventil (26) in der Versorgungsleitung (17) als Schließelement ein im Wesentlichen ringförmiges Bandelement (46) aufweist, welches an einem Gehäuse (30) des Umschaltventils (9) wenigstens teilweise abgestützt ist und welches in einer geschlossenen Position wenigstens eine Öffnung (43) des Gehäuses (30) verschließt.

4. Pleuel (1) nach Anspruch 3, **dadurch gekennzeichnet, dass** das Rückschlagventil (26) im Inneren des Gehäuses (30) des Umschaltventils (9) angeordnet ist und nach radial innen öffnet.

5. Pleuel (1) nach einem der Ansprüche 2 bis 4, **dadurch gekennzeichnet, dass** die Blende (19) und das Rückschlagventil (26) als kombiniertes Element vorgesehen sind.

6. Pleuel (1) nach einem der Ansprüche 3 bis 5, **dadurch gekennzeichnet, dass** das Bandelement (46) eine auf einem Umfang des Bandelementes (46) angeordnete radiale Bohrung (41) als Blende (19) aufweist.

7. Pleuel (1) nach einem der Ansprüche 3 bis 5, **dadurch gekennzeichnet, dass** das Bandelement (46) eine auf dem Umfang des Bandelementes (46) verlaufende Kerbe (44) als Blende (19) aufweist.

8. Pleuel (1) nach einem der Ansprüche 3 oder 4, **dadurch gekennzeichnet, dass** das Gehäuse (30) eine dem Umfang des Bandelements (46) zugewandte Kerbe als Blende (19) aufweist.

9. Pleuel (1) nach Anspruch 2, **dadurch gekennzeichnet, dass** das Rückschlagventil (26) in der Versorgungsleitung (17) als Kugelrückschlagventil ausgebildet und in dem Gehäuse (30) des Umschaltventils (9) angeordnet ist und das Gehäuse (30) eine parallel zu einem Hydraulikflüssigkeitspfad des Rückschlagventils (26) verlaufende Kerbe als Blende (19) aufweist.

10. Pleuel (1) nach einem der vorhergehenden Ansprüche, **dadurch gekennzeichnet, dass** wenigstens eines der Rückschlagventile (14, 15) und/oder die Blende (20) in das Umschaltventil (9) integriert sind.

11. Pleuel (1) nach Anspruch 10, **dadurch gekennzeichnet, dass** wenigstens eines der den Zylindern (2, 3) zugeordneten Rückschlagventile (14, 15) als Schließelement ein im Wesentlichen ringförmiges Bandelement (46) mit einem Umfang aufweist, welches das Gehäuse (30) des Umschaltventils (9) wenigstens teilweise auf seinem Umfang umschließt und am Gehäuse (30) wenigstens teilweise abgestützt ist und welches in einer geschlossenen Position wenigstens eine Öffnung (40, 45) des Gehäuses (30) verschließt.

12. Pleuel (1) nach Anspruch 11, **dadurch gekennzeichnet, dass** das wenigstens eine Rückschlagventil (14, 15) nach radial außen öffnet.

13. Pleuel (1) nach einem der vorhergehenden Ansprüche, **dadurch gekennzeichnet, dass** das Umschaltventil (9) als 3/2-Wegeventil ausgebildet ist.

## Claims

1. Connecting rod (1) for an internal combustion engine with variable compression, having an eccentric adjustment device for adjusting an effective connecting-rod length, comprising a hydraulic module (10) with a switchover valve (9) for controlling a hydraulic fluid flow of the connecting rod (1),
wherein the eccentric adjusting device has at least one first cylinder (2) and one second cylinder (3) as hydraulic chambers, and wherein in each case one line (12, 13) opens, as a common feed line and discharge line (4, 5, 7, 8), into the cylinder (2, 3), wherein the feed line (4, 5) is provided for the feed of hydraulic fluid into the cylinder (2, 3) and the discharge line (7, 8) is provided for the discharge of hydraulic fluid from the cylinders (2, 3),
wherein the cylinders (2, 3) are assigned in each case one check valve (14, 15) which is arranged in the feed line (4, 5) and permits a feed of hydraulic fluid into the cylinders (2, 3) and prevents a discharge of hydraulic fluid from the cylinders (2, 3),
wherein the switchover valve (9) has a movable piston (11) which can be displaced alternatively into a first switching position (S1) or a second switching position (S2),
wherein a chamber volume of the second cylinder (2) is smaller than a chamber volume of the first cylinder (3), and the cylinders (2, 3) are connected such that, in the first switching position (S1), hydraulic fluid can be conducted from the first cylinder (2) into the second cylinder (3), wherein, in the second switching position (S2), hydraulic fluid can be conducted from the second cylinder (3) into the first cylinder (2), **characterized in that** a supply line (17) of the switchover valve (9) has an orifice (19) as throttle, via which, in the first switching position (S1), a differential volume of the cylinders (2, 3) can flow out in throttled fashion and, in the second switching position (S2), a differential volume of the cylinders (2, 3) can be drawn in in throttled fashion, wherein the discharge line (8) of the second cylinder (3) has at least one orifice (20) as throttle.

2. Connecting rod (1) according to Claim 1, **characterized in that**, in the supply line (17), in parallel with respect to the orifice (19), there is provided a check valve (26) which permits a feed of hydraulic fluid into the switchover valve (9) and prevents a discharge of hydraulic fluid.

3. Connecting rod (1) according to Claim 2, **characterized in that** the check valve (26) in the supply line (17) has a substantially ring-shaped band element (46) as closing element, which band element is at least partially supported on a housing (30) of the switchover valve (9) and, in a closed position, closes at least one opening (43) of the housing (30).

4. Connecting rod (1) according to Claim 3, **characterized in that** the check valve (26) is arranged in the interior of the housing (30) of the switchover valve (9) and opens radially inwardly.

5. Connecting rod (1) according to any of Claims 2 to 4, **characterized in that** the orifice (19) and the check valve (26) are provided as a combined element.

6. Connecting rod (1) according to any of Claims 3 to 5, **characterized in that** the band element (46) has, as orifice (19), a radial bore (41) arranged on a periphery of the band element (46).

7. Connecting rod (1) according to any of Claims 3 to 5, **characterized in that** the band element (46) has, as orifice (19), a notch (44) running on the periphery of the band element (46).

8. Connecting rod (1) according to either of Claims 3 and 4, **characterized in that** the housing (30) has, as orifice (19), a notch which faces towards the periphery of the band element (46).

9. Connecting rod (1) according to Claim 2, **characterized in that** the check valve (26) in the supply line (17) is designed as a ball-type check valve and is arranged in the housing (30) of the switchover valve (9), and the housing (30) has, as orifice (19), a notch running parallel to a hydraulic fluid path of the check valve (26).

10. Connecting rod (1) according to any of the preceding claims, **characterized in that** at least one of the check valves (14, 15) and/or the orifice (20) are integrated into the switchover valve (9).

11. Connecting rod (1) according to Claim 10, **characterized in that** at least one of the check valves (14, 15) assigned to the cylinders (2, 3) has, as closing element, a substantially ring-shaped band element (46) with a periphery which at least partially surrounds the housing (30) of the switchover valve (9) on the periphery thereof and which is at least partially supported on the housing (30) and which, in a closed position, closes at least one opening (40, 45) of the housing (30).

12. Connecting rod (1) according to Claim 11, **characterized in that** the at least one check valve (14, 15) opens radially outwardly.

13. Connecting rod (1) according to any of the preceding claims, **characterized in that** the switchover valve (9) is designed as a 3/2 directional valve.

## Revendications

1. Bielle (1) pour un moteur à combustion interne à compression variable comprenant un dispositif de réglage excentrique destiné à régler une longueur de tige de bielle effective comportant un module hydraulique (10) pourvu d'une vanne d'inversion (9) destiné à commander un écoulement de liquide hydraulique de la bielle (1),
le dispositif de réglage excentrique possédant au moins un premier cylindre (2) et un deuxième cylindre (3) en tant que chambres hydrauliques et une conduite (12, 13) débouchant respectivement dans les cylindres (2, 3) en tant qu'arrivée et départ (4, 5, 7, 8), l'arrivée (4, 5) étant conçue pour acheminer du liquide hydraulique dans les cylindres (2, 3) et le départ (7, 8) étant conçu pour évacuer du liquide hydraulique hors des cylindres (2, 3), un clapet anti-retour (14, 15) étant respectivement associé aux cylindres (2, 3), lequel, disposé dans l'arrivée (4, 5), permet un acheminement de liquide hydraulique dans les cylindres (2, 3) et empêche une évacuation de liquide hydraulique hors des cylindres (2, 3),
la vanne d'inversion (9) possédant un piston mobile (11) qui peut être déplacé, au choix, dans une première position de commutation (S1) ou dans une deuxième position de commutation (S2),
un volume de chambre du deuxième cylindre (2) étant inférieur à un volume de chambre du premier cylindre (3) et les cylindres (2, 3) étant reliés de telle sorte que dans la première position de commutation (S1), le liquide hydraulique peut être conduit du premier cylindre (2) dans le deuxième cylindre (3), dans la deuxième position de commutation (S2), le liquide hydraulique pouvant être conduit du deuxième cylindre (3) dans le premier cylindre (2), **caractérisée en ce qu'**une conduite d'alimentation (17) de la vanne d'inversion (9) possède un obturateur (19) faisant office d'organe d'étranglement, par le biais duquel, dans la première position de commutation (S1), un volume différentiel des cylindres (2, 3) peut s'écouler de manière restreinte et, dans la deuxième position de commutation (S2), un volume différentiel des cylindres (2, 3) peut être réaspiré de manière restreinte, le départ (8) du deuxième cylindre (3) possédant au moins un obturateur (20) faisant office d'organe d'étranglement.

2. Bielle (1) selon la revendication 1, **caractérisée en ce qu'**un clapet anti-retour (26) se trouve dans la conduite d'alimentation (17) en parallèle avec l'obturateur (19), lequel permet un acheminement de liquide hydraulique dans la vanne d'inversion (9) et empêche une évacuation de liquide hydraulique.

3. Bielle (1) selon la revendication 2, **caractérisée en ce que** le clapet anti-retour (26) dans la conduite d'alimentation (17) possède comme élément de fermeture un élément en bande (46) sensiblement annulaire, lequel s'appuie au moins partiellement contre un boîtier (30) de la vanne d'inversion (9) et lequel, dans une position fermée, ferme au moins une ouverture (43) du boîtier (30).

4. Bielle (1) selon la revendication 3, **caractérisée en ce que** le clapet anti-retour (26) est disposé à l'intérieur du boîtier (30) de la vanne d'inversion (9) et s'ouvre dans le sens radial vers l'intérieur.

5. Bielle (1) selon l'une des revendications 2 à 4, **caractérisée en ce que** l'obturateur (19) et le clapet anti-retour (26) sont conçus sous la forme d'un élément combiné.

6. Bielle (1) selon l'une des revendications 3 à 5, **caractérisée en ce que** l'élément en bande (46) possède en tant qu'obturateur (19) un perçage radial (41) disposé sur une circonférence de l'élément en bande (46).

7. Bielle (1) selon l'une des revendications 3 à 5, **caractérisée en ce que** l'élément en bande (46) possède en tant qu'obturateur (19) une encoche (44) disposée sur la circonférence de l'élément en bande (46).

8. Bielle (1) selon l'une des revendications 3 ou 4, **caractérisée en ce que** le boîtier (30) possède en tant qu'obturateur (19) une encoche qui fait face à la circonférence de l'élément en bande (46).

9. Bielle (1) selon la revendication 2, **caractérisée en ce que** le clapet anti-retour (26) dans la conduite d'alimentation (17) est réalisé sous la forme d'un clapet anti-retour à bille et est disposé dans le boîtier (30) de la vanne d'inversion (9), et le boîtier (30) possède en tant qu'obturateur (19) une encoche qui suit un tracé parallèle au chemin du liquide hydraulique du clapet anti-retour (26).

10. Bielle (1) selon l'une des revendications précédentes, **caractérisée en ce qu'**au moins l'un des clapets anti-retour (14, 15) et/ou l'obturateur (20) sont intégrés dans la vanne d'inversion (9).

11. Bielle (1) selon la revendication 10, **caractérisée en ce qu'**au moins l'un des clapets anti-retour (14, 15) associés aux cylindres (2, 3) possède an tant qu'élément de fermeture un élément en bande (46) sensiblement annulaire ayant une circonférence, qui entoure au moins partiellement le boîtier (30) de la vanne d'inversion (9) sur sa circonférence et s'appuie au moins partiellement contre un boîtier (30) et qui, dans une position fermée, ferme au moins une ouverture (40, 45) du boîtier (30).

12. Bielle (1) selon la revendication 11, **caractérisée en ce que** l'au moins un clapet anti-retour (14, 15) s'ouvre vers l'extérieur dans le sens radial.

13. Bielle (1) selon l'une des revendications précédentes, **caractérisée en ce que** la vanne d'inversion (9) est réalisée sous la forme d'un distributeur 3/2.
